# EUROPEAN PATENT APPLICATION

(11) **EP 4 137 470 A1**
(43) Date of publication of application: **22.02.2023**
(21) Application number: 21192021.0
(22) Date of filing: 18.08.2021
(51) Int. Cl.: C04B 28/02, C04B 26/04, C04B 111/54

(54) **PROCESS FOR MANUFACTURING SYNTHETIC STONES AND SUCH STONES AS PRODUCTS**

(71) Applicant: Wanner, Hangama, 8001 Zürich (CH); Novin Vajari, Sina, Gilan Province, 4489133775 (IR)
(72) Inventor: NOVIN VAJARI, Sina, Vajargah City Gilan Province, 4489133775 (IR)
(74) Representative: Felber, Josef

(57) **Abstract**

These synthetic stone products are characterized by the chemical structure of ethylene-vinyl acetate of the formula (C₂H₄)ₙ (C₄H₁O₂)ₘ They and contain 15% water and in addition on ore more of the following additives: Pigments, Gravel and Sand, Nanoparticle powder, Hydroxypropyl, Ethylene-vinyl acetate, whereby the entire additives weight up to 1.5 % of the weight of the complete stone. Gravel, sand, and silicon oxide are mixed with nano particles with clear water in the amount of 15% of the final product. Then, slowing powder is added, for component A. Component B is obtained by using ethyl vinyl acetate, mixed with resin to form the polymer structure. Desired pigments and fibers are added along with the nano emulsion and lignosulfonate and hydroxypropyl are added for proper dispersion. The two pre-components A and B are being mixed to obtain a homogenious mixture C which is then transferred to the desired template and hardens out.

## Description

This invention concerns the production of synthetic or artificial stones products and the composition of such syntheticly produced stones.

Natural stones have a number of shortcomings. They are often expensive, abrasive, have a too low compressive and tensile strenght and are not resistant to acids and sunlight. In other words, they become worn out over time and change their appearance.

It is possible to produce new stone products according to market demand and customers by this present technology and there are no restrictions for the production of such new stone products. This technology, unlike other similar technologies, does not require high investments and does not need much equipment.

So far
- Ceramic tiles usually are produced in separate factories and each one produces them as a single product only.
- Decorative stones and facades, etc., which are basically taken from nature and after applying processes such as cutting, sawing, hammering, etc., are being brought into the desired shapes, with takes much efforts.
- Domestically produced mosaics which are mainly produced by two methods of pressing and of vibrating have their own process problems.

It is therefore the object and task of this invention to provide an advanced production method for the production of synthetic or artificial stones products for different purposes. Furthermore, it is an object and task of the invention to indicate the general composition of these synthetic stone products and to indicate particular compositions for various different purposes or uses.

This task is solved by a synthetic stone product which is characterized by a chemical structure of ethylene - vinyl acetate of the formula (C₂H₄)ₙ (C₄H₁O₂)ₘ, and thus by this formula:

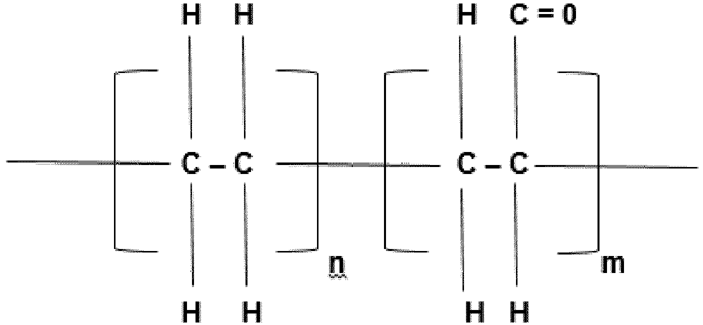

These synthetic stone products are composed of cement, sand, pigments and special additives. Cement plast artificial stone as a product of this design is a mixture of cement and polymer materials, and these products have a great variety and in terms of physical strength and shape, appearance and their cost is fully competitive with products such as granite, marble, tile, ceramic, mosaic and other stones. An important component of tile is glaze. The glaze is a glass-like surface that has two functions: decorative and functional. Glazed tiles not only enrich the architectural surface of the tile but also act as insulation of the building walls against moisture and water.

The task to produce such artifical or synthetic stone products of this formula is solved by a production method which is characterized by the following steps:
A1) raw materials such as gravel, sand and silicon oxide are mixed with nano particles in powderform with clear water in order to that the nano particles do fill the pores among the coarse grains,
A2) slowing powder is added in order to avoid a sticking together of the materials in the mixture and the mortar does not harden, and so a first pre-component A is obtained, besides to the steps A1 and A2, in a spearate container
B1) the main polymer of ethyl vinyl acetate, which is a solvent in organic composition, is being mixed with resin, so the ethyl vinyl acetate does act as main copolymer together with the resin to form the polymer structure,
B2) then desired pigments and fibers are added along with the nano emulsion and
B3) lignosulfonate and hydroxypropyl are added for proper dispersion and so a second pre-component B is obtained,
C1) finally, this second pre-components B in the form of the prepared composite polymer composition is added to the first pre-component A in the container containing the raw materials and the two pre-components A and B are being mixed to obtain a homogenious mixture C.
C2) The homogenious mixture C obtained is then transferred to the desired template,
C3) the mixture C, by drying and hardening out in the template does form a three-dimensional synthetic polymere artificial stone.

By this production method, different stone products can be made, such as tiles, ceramics, mosaics, decorative stones and facades and floors of sidewalks and parks, fireplaces, etc., Each stone type has its own methods and so far there has been no technology that can do all this. But the present method offers a production method which allows to produces all kinds of synthetic stones with only one production line and one set of equipment.

The principles of this technology are in the formulation of a combination of materials and molds specific to this technology, and the particular steps of production are further outlined in the following: The basis of this technology is based on a special formulation with a combination of grade of cement, processed aggregates according to the results of experiments, mineral pigments for coloring and a small percentage of polymeric materials that using the molds of this technology leads to different products with very desirable qualities.

In the figures, the properties and specification of these products are outlined. It shows:
- Figure 1: The compressive strength of the product after 24 hours, 48 hours and 14 days after production;
- Figure 2: The physical specification of products and its comparison with Russian GOST 80-24099 standard which define the technical requirements of decorative facing slabs of crushed natural stone.
- Figure 3: A comparison of test results according to Iranian 755 national standard.
- Figure 4: An interior wall made of grey aritificial stone products;
- Figure 5: An interior wall made of white aritificial stone products;
- Figure 6: An interior wall ornament made of white aritificial stone products;
- Figure 7: An interior wall ornament made of dark aritificial stone products;
- Figure 8: An interior wall ornament made of bronce colored aritificial stone products;
- Figure 9 :: An interior wall ornament made of white aritificial stone products;
- Figure 10 :: An interior bricket wall ornament made of color-structured aritificial stone products;
- Figure 11 :: An interior bricket wall ornament made of colored mosaic-like aritificial stone products;
- Figure 12 :: An outdoor wall covering of ornamental aritificial stone products;
- Figure 13 :: A house with bricket walls made of aritificial stone products.

These synthetic stone products can make use of more than 12 types of polymeric and non-polymeric materials that form their proprietary formulations. These formulations give unique features to these synthetic stone products which can be produced. These features include tensile strength, high compressive strength and flexural strength, thermal insulation, lightness, design variety, low water absorption, resistance to light radiation, as well as increasing the product's resistance to thermal shocks and increasing abrasion resistance.

Also, the advantages of the products of this technology are:
1. High variety of products in different shapes and colors in accordance with different tastes
2. Low cost of the product
3. Very low investment to create an industrial unit
4. Compliance with national and international standards
5. Chance to obtain a variety of valid certificates from different countries

Other important advantages of this technology are low volume of investment, easy access to raw materials, very low energy consumption, no need for large warehouses to store products for a long time for retrofitting, no need for steam bath or irrigation of products, no need for putty and polishing operations, sanding products, and working with simple and semi-skilled workers.

The general technical specifications of these design synthetic stone products are:
1. Compressive strength: 600 - 1000 kg/cm²
2. Tensile strength: 60 - 150 kg/cm²
3. Cooling resistnace: Greater than 500 cycles (cooling at -50 °C and heating at +500 °C)
4. Water absportion: less than 3 %
5. Abrasion resistance: less than 0.4 g/cm²
6. High flexural strength
7. Paints resistant to acid rain and sunlight

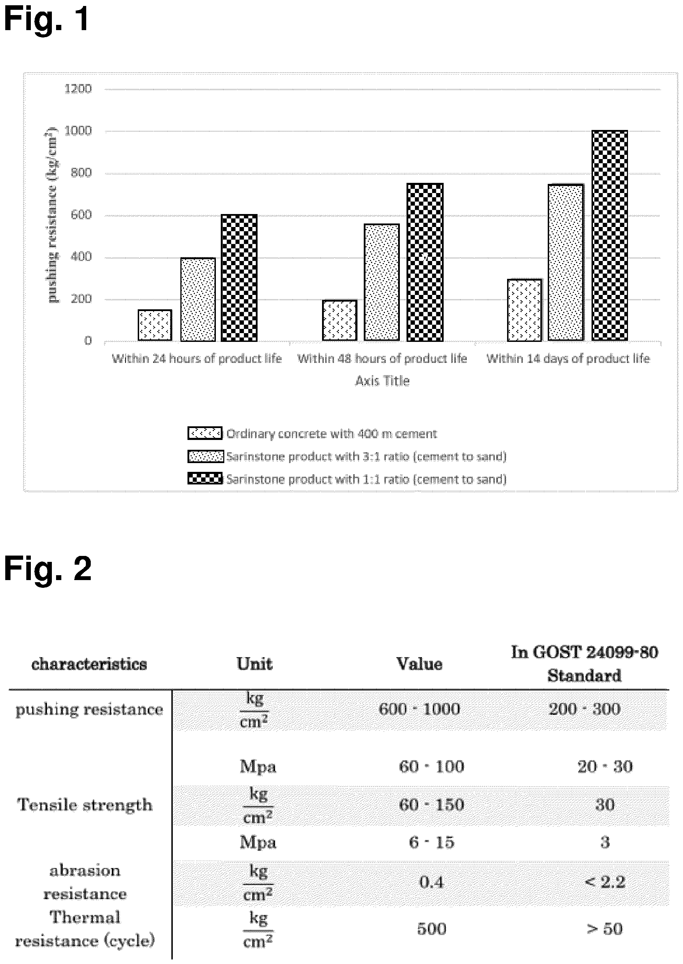

Figure 1 shows the compressive strength of products with varous ratios of cement and sand after 24 hours, 48 hours and 14 days after production. In this diagram, the strength of the product with different ratios of cement and sand is also shown.

Figure 2 shows the phsical specification of products and its comparison with Russian GOST 80-24099 standard. According to this standard, the compressive strength should be greater than 20(200)- 30(300) (kg/cm) MPa, and as can be seen for the products of this technology, the compressive strength is 60(600)-100(1000) (kg/cm) MPa which is about 3 times the standard value. The same is true for tensile strength at the bending point and wear and cooling resistance according to the table shown in figure 2.

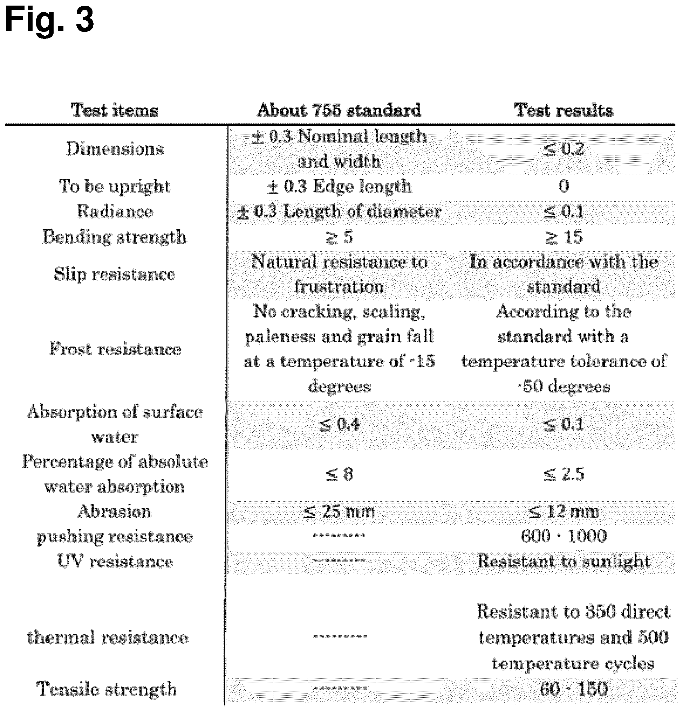

Figure 3 shows a comparison of thest reults with Iranian 755 national standard for cement products. As can be seen, the results obtained from the sample of mosaics with a thickness of 24 mm, is higher than the 755 national standard of Iran.

Due to the fact that the mosaics produced in Iran are completely traditional, and due to the mandatory implementation of domestic standard 755, concrete mosaic products will be eliminated over time and synthetic artificial stone nanopolymer products will replace these products in the Iranian market. In this case, the need for these products will be greatly increased. These artifial stone products can be used both as intermediate or final products. As mentioned in the previous sections, the products of this project include a variety of building materials so that the use of these products in different parts of the building is welcomed. The product of this project is known as the final and consumer product and is not presented as an intermediary product of other industries.

The use of the product does, in addition to preventing a direct extraction from natural stone mines and therefore protecting of the environment, enhance the diversity, beauty of stone products for the building industry, on top of their extraordinary resistance. Due to their antibacterial properties, it allows humans to work and even live in a bacterial-free environment.

These **Nano Polymer Artificial Stones** are less expensive than similar synthetic samples produced. The most important factor in this regard is the use of proprietary formulations which cost far less compared to other technologies which use expensive materials in their compositions such as silver and titanium. Also, this product, which is in the category of ornamental stones, can be used to produce the following items:
1. Production of granite stones in different sizes and colors
2. Production of all kinds of table stone
3. Production of various mosaics in different shapes and colors
4. Production of marble that can be used on floors, walls, stairs, etc.
5. Production of natural facades for outdoor display
6. Production of floor coverings to beautify cities, parks and recreation centers
7. Production of various volumetric objects such as: fireplaces, vases, fences, etc.
8. Production of various artistic and historical forms

One of the most important advantages of this technology is the production of products that cannot be produced naturally. For example, the production of very thin granites with a thickness of mere 3 mm with a completely shiny surface and glass that can withstand the pressures. Production of granites with large dimensions (2 meters × 2 meters) is also possible by this technology, which is not produced naturally. The variety of designs and colors will be based on the taste of the customer and the market, and it is possible to produce different products in different colors and designs (unlike natural stone) by this technology.

This technology does not use the process of heating, polishing, putty, curing (irrigation of the product), and long-term storage of the product in storage. Tiles and ashlar (finely dressed, cut, worked stones) can be produced using special polymer molds and is known as one of the engineering stones in the world.

At present, this technology can provide more than 300 different types of products by molds to be designed in different sizes and designs. The products of this technology include the following:
1 Production of tiles and granite
2 Production of ceramic floors
3 Production of various metallized products
4 Production of various mosaics
5 Production of outdoor floor coverings
6 Production of various volumetric shapes
7 Production of facade bricks
8 Production of all kinds of natural outdoor views
9 Production of marble

As mentioned in the previous sections, the products of this technology have a great variety and this point has made this technology attractive in comparison with other technologies. In addition to the fact that different products can be produced using this technology, the color and size of the products can be changed according to the market order. In addition to the normal volumetric mass, which is often found in floors and stairwells and products that require very high strength, products with lower volumetric mass can be created with this technology for building facades and building style. Ultra-light products in this industry with a volume mass of 1000-1200 kg/m³ can be provided. The general principles of this technology which provide shiny and gloss surfaces of products are due to structural changes in cement and polymerization reaction and change in the molecular structure of materials and precise control of moisture in the reaction as well as the use of special molds. If out-of-technology molds are used, the quality, gloss and transparency of the surface are in no way comparable to the molds of this technology.

Below is given a formulation with all raw materials contained in 14 kg of the final synthetic stone product that make up the exclusive formula of according to this invention:

| No. | Materials name | Mass in kg | in percent of total mass |
|---|---|---|---|
| 1 | Pigment | 0.07 | 0.50 |
| 2 | Gravel and Sand | 7.2716 | 51.94 |
| 3 | Nanoparticle powder | 0.014 | 0.10 |
| 4 | Hydroxypropyl | 0.042 | 0.30 |
| 5 | Ethylene-vinyl acetate | 0.07 | 0.50 |
| 6 | Special resin | 0.035 | 0.25 |
| 7 | Nano suspension | 0.014 | 0.10 |
| 8 | Fiber Yarn | 0.007 | 0.05 |
| 9 | Lignosulfonate | 0.028 | 0.20 |
| 10 | PP Yarn | 0.007 | 0.05 |
| 11 | Retarder Powder | 0.0014 | 0.01 |
| 12 | Silk cocoon fibers | 0.07 | 0.50 |
| 13 | Silicon dioxide | 0.07 | 0.50 |
| 14 | Water | 2.1 | 15.00 |
| 15 | Cement | 4.2 | 30.00 |
| Total | | 14 kg | 100% |

About how to combine these materials first - the raw materials, including sand at silica - are mixed with powder nano-particles and a very little amount of good and pure water so that the nano particles fill the pores among these coarse grains. Slowing powder is also added at this stage so that the materials don't stick together too quickly and the mortar does not harden, in a separate container. The main polymer of ethyl vinyl acetate, which is a solvent in organic composition, is mixed with resin and then the desired pigment and fibers (silk, PP yarn, fiber yarn) are added along with the nano-emulsion and lignosulfonate and hydroxypropyl are added for proper dispersion. Finally, this composite polymer composition is added to the container containing with the raw materials and mixed well. The mass is then transferred to the desired template. The set of these materials can be used in the preparation of composites as a polymer artificial stone. The combination of gravel, sand and silicon oxide is considered as the raw material for the formation of a cement-like material.

Ethyl vinyl acetate as the main copolymer together with the resin form the polymer structure. Silk fibers, polypropylene fibers and fiber-fibers are used to strengthen the rock raw material. Nanoparticle powder is also considered as a raw material filler and suspension of nanoparticles for abrasion resistance, bending resistance, increasing compressive strength, reducing water absorption and heat resistance, etc. and these compounds are mixed into a series of additives which are required. For example, hydroxypropyl as an auxiliary additive, and lignosulfonate acts as a dispersant and surfactant. The use of a retarder powder for this purpose is recommended. Sand particles do not stick together and do not harden at once. In general, the composition of polymer, resin, pigment, filler of nanoparticles and sand particles and additives are used as the initial composition of polymer facade stone. Here is the general chemical structure ethylene - vinyl acetate: (C₂H₄)ₙ (C₂H₁O₂)ₘ

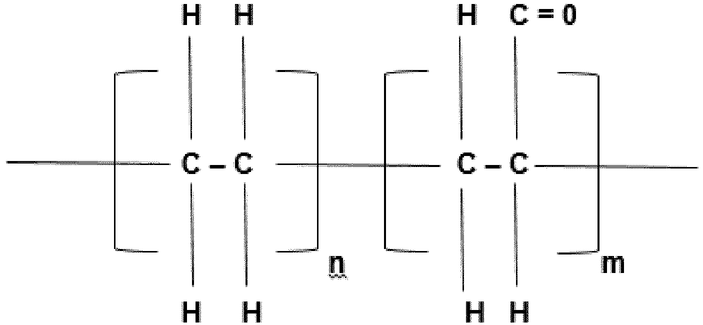

The special resin used in this work can be a super-lubricant of poly carboxylic ether, this poly carboxylic ether working as plasticizer. The first step is the combination of resin and polymer: By using lubricating polymer chains, the branches will not increase from each other and their swelling will be prevented. In fact, the resin can control the mobility of the chains. Hydrogen bond is formed between the resin and the hydrophilic parts of the polymer: (C₂H₄)ₙ (C₂H₁O₂)ₘ + poly carboxylic ether -> final polymer. The second step is the combination of hydroxy propyl and lingo sulfonate. Hydroxy propyl - lingo sulfonate -> [C₃H₅0 +R - SO₃H] -> Hydroxy propyl - sulfonated lingo. The dual link can be opened. Connect the two together. This compound absorbs pigment and fibers and since it has a sulfonic group with an electrostatic range can cause them to disperse and spread evenly. The process mentioned below is to produce a square meter sample of facade bricks from synthetic nanopolymer stones that the mass of one square meter of consumables for the production of this product is equal to 138,846 kg in the number of 65 composite molds 5.5 × 19.50.

Necessary Equipment:
1. UPVC tank 5 kg
2. Mixer: 20-horsepower three-phase electric motor 1400 rpm and 1:40 custom gearbox 210 direct cable, wear-resistant blades floor thickness of 20 mm and wall thickness of 8 mm with adjustable arms 33 to 40 mm. Centrifugal design of the pen with an automatic exit part with pneumatic jack, wind control and mixer valve bearing diameter of 160 cm and body height of 55 cm with a volume of 1500 liters with a capacity of 700 to 800 kg, normal volume mass of plastic cement and equivalent to 1100 kg. And equivalent to 1100 kg mass normal volume of light materials production capacity of paste adhesive 1200 to 1300 kg and powder adhesive 1500 kg.
3. Composite Mold injection system: U-screw material transfer and molding with 3 valves, digital speed control and inverter 7.5 hp. Halo Shaft gearbox 150 (see https://parsgearbox.ir/products/halo-shaft-gearbox/?lang=en), with Matisman central tube 2.5 inches, and 8 mm screw sheet with a total length of about 580 cm with a base, funnel with a capacity of 700 kg and 4 mm sheet with cap for 2 mm sheet for screw. A Matisman central tube is a pipe that is produced and manufactured in such a way that it has a uniform and seamless body and no welding has been done on it. This type of pipe is usually made of plain low carbon steel. However, by adding some materials to the inside and outside of the pipe, it may be made resistant to rust. These pipes are stronger than others due to their uniformity and seamlessness and have a higher price than other pipes.
4. Vibrator: Vertical vibration device. The dimensions of vibrating table 2 × 3 meters with table surface 8 mm with high speed 3-phase viral motor speed 1200 kg with table placement of 50 × 50 cm scales. General 16 chassis and 16H central chassis, heavy European wide wing with custom metallurgical springs.

Production method for these 14 kg as indiacted in section [0024]:
1. First, grind the grains and light grains to a mass of 7,259 kg for 30 seconds at 36 rpm in a mixer for 30 seconds.
2. The next step is to add cement with a mass of 4.2 kg and fiber fibers with a mass of 0.007 kg (7 grams) to the mixer and do a dry mix for 2 minutes at 36 rpm.
3. At this stage, add water at a temperature of 10 degrees Celsius and 1.2 kg to the mixer at 36 rpm. Mix all the ingredients for 3 minutes.
4. In the UPVC tank, lingo materials, special resin, nanoparticle powder, nano and retarder suspension, hydroxypropyl and pp fibers in the masses of 0.028 kg, 0.035 kg, 0.014 kg, 0.02 kg and 0.007 kg at room temperature, respectively, mixed. Add the resulting liquid to the circulating mixer at 36 rpm and simultaneously add pigment with mass 0.07 kg and ethylene vinyl acetate with mass 0.07 kg and mix for three minutes.
5. The prepared mortar enters the molding and injection machine at this stage and during 15 minutes, the molding and injection operation is performed.
6. After injecting the materials into the molds, the molds enter the vibration on the vibrator device and the vibration process is performed on them for 2 minutes to create a connection between the materials.
7. In the final stage, the molds enter the processing environment, which includes shelves 2 meters high and in the form of 20-centimeter floors, at a temperature of 25 degrees Celsius for 10 hours, and at the end of this time, the final product can be separated from the templates. Note: All processes are performed at room temperature.

In the following, more information will be given to the various components to be used for the production of these artifical stone products.

### 1. Sand

Sand is one of the two main components of **Nano Cement Plast Artificial Stone Products,** which forms the basis of the structure of these products. The sand used in this project is soft sand that can be obtained and supplied easily in many countries. It should also be noted that the sand must be supplied from standard mines and the sand is poor, that is the sand consists of small stones and gravel and does not contain salt.

### 2. Cement

Creating concrete joints and forming the basic structure of **Nano Cement Plast Artificial Stone Products** is the responsibility of the cement used in it. The cement used in this product is white and black cement. The following is a summary of the types of cement available: Five types of Portland cement based on ASTM C 150, eight types of mixed hydraulic cement based on ASTM C595, three types of building cement based on ASTM C91, two types of plastic cement, three types of expansion cement and a number of special mixed or Portland cements for blocks, pipes and other applications. A number of quick-setting and quick-setting cements are also available today that conform to the C595 specification. In addition, there are high-aluminum and magnesium cements or Sorel cements (Sorel cement or Sorel concrete is an acid-base cement developed in the 1850s/1860s by the French engineer Stanislas Sorel).

### 2.1 Standard Portland cements:

### Type 1, Ordinary Cement (ASTM C150):

Normally, this type of cement is used, unless it is mentioned that another type of cement must be used. Some of its uses are: street tables, mortars, coatings and foundations of buildings that are not sulfated.

### Type 2, moderate resistance against sulfate (ASTM C150 Modified):

Used for cases where moderate hydration temperature is present. The maximum A3C is 8%, that is the maximum quantity of usage of A3C (Aluminate 3 Calcium) substance.

This type of concrete cement can also be used in the vicinity of seawater.

### Type 3, fast hardening (ASTM C150):

This cement is more milled and has higher percentages of S3C, that is Silicium 3 Calcium, and C3A, C3A being three calcium aluminate which plays a major role for cement strength.

The 3- and 7-day compressive strengths of concrete made with this cement are approximately equivalent to the 7-day and 28-day strengths of concrete made with types 1 and 2, respectively. But the final resistance is approximately equal to or less than the other two types.

### Type 4, low heat (ASTM C150)

The percentages of S2AF (Silicium 2 Aluminate Fluor) and C4C (Calcium 4 Calcium) are relatively high while the percentages of C3S (C3S is Tricalcium silicate which quickly enters into chemical reactions and hardens the concrete) and C3A are low. The heat of hydration is lower than other types and develops more slowly, and the process of gaining resistance is much slower. This type of cement is used in bulk concrete structures with low surface to volume ratios and can be provided only in case of special order for very high tonnages and long consumption. Compared to other types, this cement needs a longer processing time.

### Type 5, anti-sulfate (ASTIVI C15):

This cement has a very small amount of C3A (5%). Instead of this criterion, an alternative letter can be determined for AF4A + C3C using the ASTM452C specification. This type of cement is used for concretes in the presence of alkaline earth sulphates, groundwater sulphates, and seawater. Many factories usually supply this cement, but special orders may also be required.

### Types IA, IIA and IIIA support (ASTM C 150):

This type of cement is similar in composition to type III, II, and I Cements except that it is mixed with an air-bubble additive during construction. Of course, it is a weak method to supply air bubbles in concrete and other factors affecting air bubbles in concrete cannot be changed with it. This type of cement is usually found only in East America.

### b. Mixed cements (ASTM C 595):

These cements include clinker milled mixtures of ordinary Portland cement and wind ash, natural or calcined pozzolans, or slag with specified percentages. They may also include mixtures of slag lime and pozzolanic lime. In general, these cements increase the resistance of concrete against alkaline reaction of aggregates (due to the use of free lime in concrete), sulfate attack and seawater. Also, due to lower permeability, higher resistance against damage caused by freezing and thawing of ice and salt debugger show. The process of heat release by mixed cements is slower and they may have a slower resistance, especially at low temperatures. However, it should be noted that the total amount of heat released by these cements is not much different from similar Portland cements, and eventually the mixed cements will reach the final strength around Portland cements.

### c. Masonry cement 91.ASTM C:

Masonry cement is cement that is made in most industrialized countries of the world for use in mortars and construction works. Most factories follow their own formula for making this cement and keep it secret and do not publish it. This cement is produced in three types M, S, N, which type M provides the highest resistance for building mortars. This cement is usually made by mixing about 50% of Portland cement clinker and about 45% of high quality limestone powder and some gypsum and some additives with less strength than Portland cement but has desirable properties for construction work. Some masonry cements are a mixture of Portland cement, dead lime, and additives.

### d. White and colored cements (ASTM C 150):

This type of cement complies with the specifications of Portland cement types I and III. The difference is that by choosing the appropriate raw materials, dyes such as iron and magnesium oxides, etc. are prevented from entering the manufacturing process. To make colored cements, chemically inert mineral pigments are added to the cement. Portland cement can also be used to make red, brown and black colored cements. White and colored cements are mostly used for decorative works. The color of cement should be stable against atmospheric and light factors. Common color materials are:
1. Iron oxide for red, yellow, brown and black
2. Manganese oxide for black and brown colors
3. Chromium oxide and hydroxide for green and blue
4. Cobalt for blue
5. Ultramarine for crimson color
6. Soot for black
7. Raw and burnt amber for brown
8. Akhra flower for yellow color

### e. Plastic cement:

Plastic cement is obtained by grinding a mineral lubricant with Portland cement clinker that complies with ASTM standard type II and I specifications (ASTM International - initially know as American Society for Testing and Materials - is and international standardizing organisation in West Conshohocken, Pennsylvania, USA). UBC regulations allow the use of lubricants up to 12% of the total volume. Plastic cement meets the requirements of ASTM 150 C except for insoluble residues, air bubbles and the next calcination additive in addition to the specific UBC regulations. Plastic cement is used for Portland cement plasters and gypsum and cement coatings and is not recommended due to the large amount of air created for concrete. This type of cement can also be used to make concretes in which asymmetric settlements are likely to occur.

### f. Oil well cement (API10 standard):

This type of cement consists of several groups and is designed to meet the conditions of temperature and high pressure created in the injection of oil wells. This slurry cement with low viscosity and slow setting causes it to remain as smooth as possible in order to facilitate the pumping pressure in deep wells. It has a small amount of A3C. It is coarse-grained and cannot contain auxiliary materials for milling.

### g. Expanded cement types M, K, S:

This type of cement is used to prevent shrinkage of concrete and minimize cracking. Their resistance to sulfates is low and they are produced only by order.

### h. High aluminum cement:

This type of cement contains calcium aluminates instead of calcium silicates. It has high initial resistance (24 hours) and has refractory properties. If the concrete made with this type of cement does not cool down within 24 hours after mixing and pouring, a 40% reduction in strength can occur in a 6-month drying period.

The cement used for the presented artiical stone products is custom Portland white and black cement.

### 3. Grain pigment

Pigment is a product of processing minerals such as titanium, zinc, etc. It has been widely used in industries. This product is mostly used in paint, rubber and ink industries. Some European countries, China and Ukraine are now the largest producers of pigment in the world. The price of this product in world markets fluctuates between 1300 to 2400 dollars per ton depending on the quality. The amount of pigment used in the production of Nano Cement Plast artificial stone products is about one percent of the total raw materials and its amount is very small, so there is no concern in terms of supply.

### 4. Chemical and polymer additives:

Consumption of other additives is between 1 to 2 %, which is not a concern due to the small amount of consumption during its supply. It should be mentioned that the production of resins for this industry is done at the company's location due to a special formula and this substance is not readily available in the market and according to the type of material used, the type of production varies in terms of normal, semi-light and ultra-light bulk mass, and the supply of chemical-polymer raw materials is fully guaranteed.

Investigation and research on the number and technical specifications for a production line, for devices and equipment (space, electricity and other required facilities) show this: The electricity required for the production line to produce 300 square meters per day is equivalent to 20 kW, and taking into account the electricity required for lighting the hall and other issues is a total of 50 kW. The required facilities for the polymer stone production unit include general branches of water, electricity and gas, which can be provided and are available in almost all parts of the world:

**Water:** Water is required for 2 applications. The first case is for mixing and making a mixture whose required water is municipal water and does not need a treatment system or special facilities such as deionization and hardening, etc. The next item is for public use: drinking water, sanitation, unit washing, green space, etc. In this case, too, urban water is sufficient and no special facilities are needed. The total water consumption of this unit is 3000 cubic meters per year. **Electricity:** Electricity required by the unit for public consumption and production line and a total of 50 kW of power is required. Gas: This production line does not require fuel and gas is intended for public fuel consumption and heating of units and buildings. The annual amount of gas required is 22,500 cubic meters per year. To produce 300 square meters of product in one shift, 12 personnel in the production department will be needed.

Emergence of artifical stone products with antibacterial properties: Also, another achievement is the production of **antibacterial polymer stone** using nanotechnology and offering different products compared to domestic and foreign products that have higher resistance to thermal shocks and have higher abrasion resistance. By using antibacterial and self-cleaning coatings on tiles, ceramics and stones and using them in public places such as hospitals, the spread and transmission of pathogenic bacteria is prevented and thus, in addition to prevention, the spread of the disease in people is prevented. Antibacterial nanocoating also provide inherent antibacterial properties on surfaces that are not removed by washing with detergent. The advantages of antibacterial stone product are:
- Reducing cleaning periods
- Reducing surface wear and tear
- Safe and environmentally friendly materials
- Reducing the cost of cleaning and disinfecting the environment
- Reducing the use of detergents for cleaning up to 70%
- Reducing environmental pollution and protecting surfaces from the effects of moisture and dirt
- Ease of cleaning hard stains such as silicone, grease and oil with water

In the following, some application products are being discussed:
Mosaic is a dense flooring, in fact it is a type of concrete that achieves its density either by pressing or by vibration. In general, the mosaic consists of two levels: Top layer or mosaic color: This layer, which forms the role (surface) of the mosaic, in which stone powder, cement, water and granular and colored compounds have been used. Bottom layer or substrate: This layer of mosaic is thicker than the surface layer and also plays the role of pressure bearing. And like the surface layer, it is composed of cement, water and sand.

Types of mosaics:
1. Granite and ordinary mosaic
2. Vibrating mosaics : Vibrating mosaics are non-abrasive and non-pressing and do not require complex machines to produce. Only a mixer, a measuring cup and a conveyor belt with a length of 10-12 meters equipped with a vibrator are sufficient. Its production method is such that after mixing the material by the modulator, the required amount of each mold is poured into the rubber molds and placed on the conveyor belt, which is a vibrating tape. And by vibrating the material, it causes air to escape from the mosaic material. The molds are left to dry for 5 hours, then the molds are separated, and the mosaics are soaked in water and then packaged.
3. Washed mosaic: The production of this mosaic is similar to granite and ordinary mosaics, with the difference that the mosaics stay in the greenhouse for a while until they lose their physical water for 5 hours. And then at the time of grinding, they are rubbed differently from ordinary mosaic. In the sanding machine, instead of sanding stone, there are wire brushes that process the mosaics in three stages, which are arranged from rough to soft, and during sanding, water is sprayed on the mosaics by pressure.
4. Single layer mosaics: There is another type of mosaic that is produced and used in Italy and Germany. This mosaic is single-layer and is used in multi-storey buildings due to its low weight. This type of mosaic does not have a lower part and very fine grains are used in it, but in general, its production method is like granite mosaic and in the press part, there are channels on which there is a filter that has been pressed and it is completely It comes out.

Classification of mosaics, based on the appearance and appearance of the surface:
1. Cement mosaic: The mosaic has no decorative stones on the surface and only has grooves and simple designs.
2. Stone mosaic: It is a mosaic that has decorative stones used on its surface and is made in three forms: grooved (patterned), smooth and washed.
3. Mosaic grooved: It is a mosaic that has depressions and protrusions on its surface in various forms and is used as a floor carpet for the sidewalk and the yard.
4. Washed mosaic: It is a mosaic on the surface of which grains of sand are prominent.
5. Plaque mosaic: It is a mosaic on the surface of which there are hard and polished building materials, and the size of these stones varies according to the dimensions of the mosaic and is made smooth.
6. Standard 755 Iran Mosaic: According to the standard 755-lran, Mosaic floors must have these characteristics:

| | |
|---|---|
| Water absorbtion | max. 8% |
| Dimension telorance | max. +2 mm |
| Concave & convex | max. +2 mm |
| Mean abrasion length | max. 32 mm |

In general, the mosaic are single products and are presently mainly produced traditionally in Iran by a conventional industry. The present technology offers a chance to change that industry and make it availalbe for use anywhere.

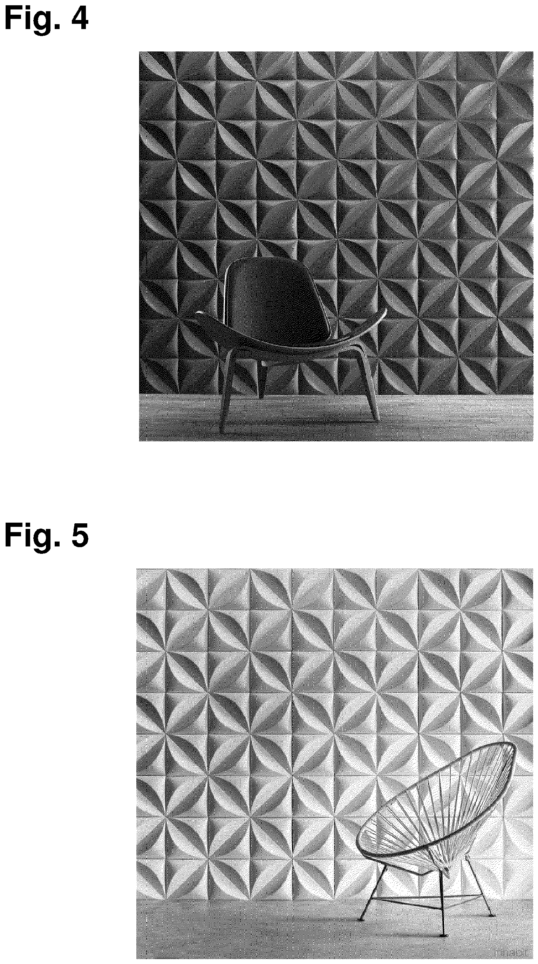

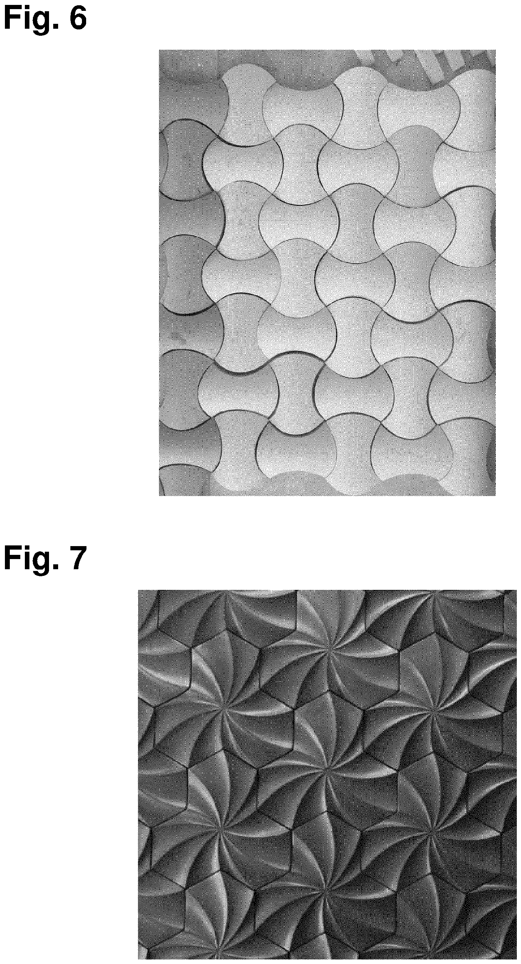

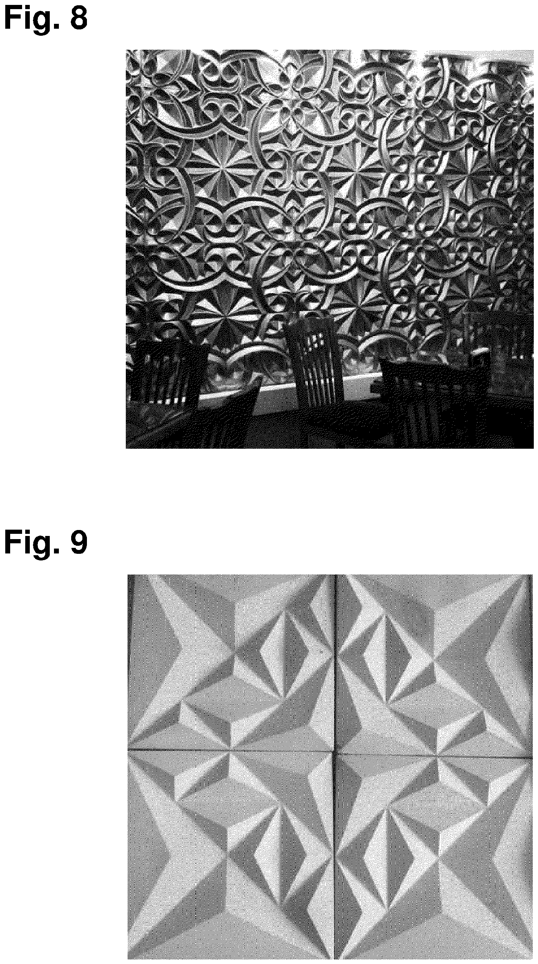

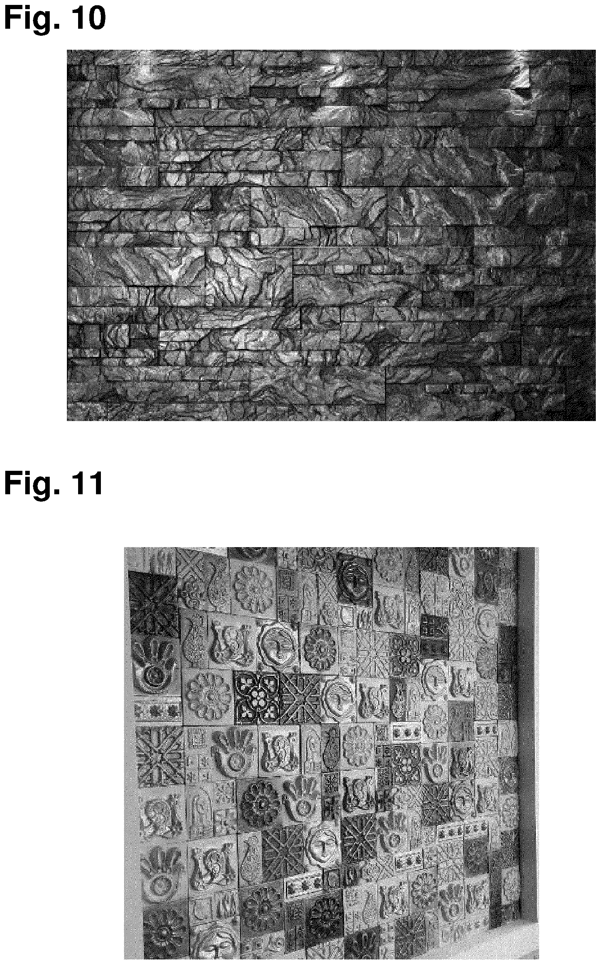

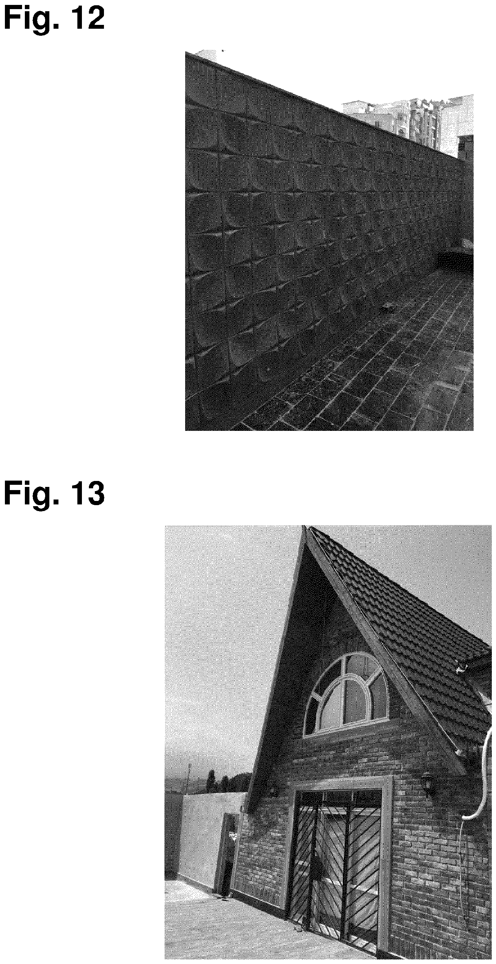

Figures 4 to 11 show vairous interior walls made of aritificial stone products. It gives a glimps of the huge possibe variants by altering shape, structure, surface, and colors of these artifical stone products. Figure 12 shows an outdoor application. The outdoor application is not limited to walls and fassades but the artificial stone products and likewise be used for floors - indoor and outdoor pavements. Ultimaltely, figure 13 shows a house with a front wall made as as bricket wall which is made of aritificial stone products.

One of the most important advantages and properties of Nano Cement Pelast artificial stone products - artificial nano stone - is that it has the ability to produce all the above products in only one single line. Therefore, in terms of variety of production methods, these products have only one production process, which is examined in detail in the next section, but in the same line, a variety of products can be produced.

## Claims

1. Synthetic stone product **characterized by** a chemical structure of ethylene - vinyl acetate of the formula (C₂H₄)ₙ (C₄H₁O₂)ₘ

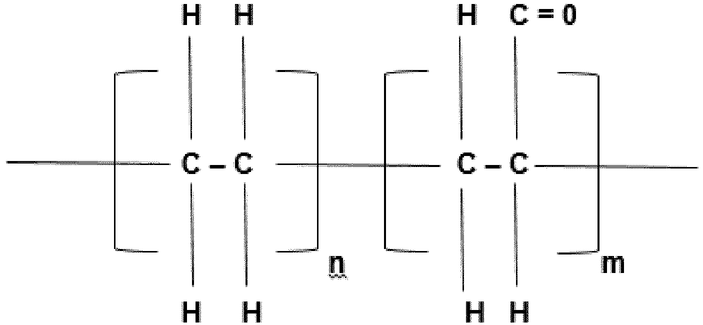

2. Synthetic stone product according to claim 1, **characterized in that** it contains poly carboxylic ether as a super-lubricant resin.

3. Synthetic stone product according to on of the preceding claims, **characterized in that** it contains in addition on ore more of the following additives with the indiacted percentages of the weight of the complete stone:
1 Pigments, between 0.2 and 0.5 %
2 Gravel and Sand at least 98.5 %
3 Nanoparticle powder between 0.01 and 0.1 %
4 Hydroxypropyl between 0.2 and 0.3 %
5 Ethylene-vinyl acetates, up to 0.5 %
6 Special resins up to 0.25 %
7 Nano suspension up to 0.1 %
8 Fiber Yarn up to 0.01 %
9 Lignosulfonate up to 0.2 %
10 PP Yarn up to 0.05 %
11 Retarder Powder up to 0.01 %
whereby the entire additives weight up to 1.5 % of the weight of the complete stone.

4. Synthetic stone product according to one of the preceding claims, **characterized in that** it is equipped with an antibacterial nanocoating to provide inherent antibacterial properties on the surface which is not removed by washing with detergent.

5. Process for producing synthetic stone products according to claim 1, **characterized in that**
A1) raw materials such as gravel, sand and silicon oxide are mixed with nano particles in powderform with clear water in order to that the nano particles do fill the pores among the coarse grains,
A2) slowing powder is added in order to avoid a sticking together of the materials in the mixture and the mortar does not harden, and so a first pre-component A is obtained,
besides to the steps A1 and A2, in a spearate container
B1) the main polymer of ethyl vinyl acetate, which is a solvent in organic composition, is being mixed with resin, so the ethyl vinyl acetate does act as main copolymer together with the resin to form the polymer structure,
B2) then desired pigments and fibers are added along with the nano emulsion and
B3) lignosulfonate and hydroxypropyl are added for proper dispersion and so a second pre-component B is obtained,
C1) finally, this second pre-components B in the form of the prepared composite polymer composition is added to the first pre-component A in the container containing the raw materials and the two pre-components A and B are being mixed to obtain a homogenious mixture C.
C2) The homogenious mixture C obtained is then transferred to the desired template,
C3) the mixture C, by drying and hardening out in the template does form a three-dimensional synthetic polymere artificial stone.

6. Process for producing synthetic stone products according to claim 5, **characterized in that** sand which is mixed in under step A1 is soft sand which contiains no salt - hence is free of salt and the cement use dis whithe and black cement out of this selection:
• Standard Portland cement based on ASTM C 150
• Mixed hydraulic cement based on ASTM C 595
• Building cement based on ASTM C 91
• Plastic cement
• Expansion cement
• Quick-setting cement according to the C595 specification
• High Alumina Cement (HAC), sometimes known as calcium aluminate cement (CAC) or aluminous cement
• Magnesium cement (Sorel cement)

7. Process for producing synthetic stone products according to one of claims 5 to 6, characerized in that at least one of iron and chromium nanoparticles are added to the mixture C to create the desired color in the composition.

8. Process for producing synthetic stone products according to one of claims 5 to 7, **characterized in that** at least one of iron and chromium nanoparticles are added to the mixture C to create the desired color in the composition.

9. Process for producing synthetic stone products according to one claims 5 to 8, **characterized in that** one or more out of a selection of silk fibers, polypropylene fibers and fiber fibers are added to the mixture C to strengthen the rock raw material.

10. Process for producing synthetic stone products according to one of claims 5 to 9, whereby nanoparticle powder is added in step A1 as a raw material filler and suspension of nanoparticles for abrasion resistance, bending resistance, increasing compressive strength, reducing water absorption and heat resistance.

11. Process for producing synthetic stone products according to one of claims 5 to 7, hereby nanoparticle powder is mixed into component A and B in a series of additives.

12. Process for producing synthetic stone products according to one of claims 5 to 11, whereby hydroxypropyl is added.

13. Process for producing synthetic stone products according to one of claims 5 to 12, whereby lignosulfonate is added and acts as a dispersant and surfactant.

14. Use of a synthetic stone product according to one of claims 1 to 5 and made according to one of claims 4 to 13 for any one of the following purposes:
• as granite stones in different sizes and colors,
• as table stone
• as mosaics in different shapes and colors
• as marble that can be used on floors, walls, stairs, etc.
• as polymer facade stones for outdoor display
• as floor coverings to beautify cities, parks and recreation centers
• volumetric objects such as: fireplaces, vases, fences, etc.
• as artistic and historical scupltures and forms.
